# EUROPEAN PATENT APPLICATION

(11) **EP 4 184 619 A1**
(43) Date of publication of application: **24.05.2023**
(21) Application number: 21841450.6
(22) Date of filing: 15.07.2021
(51) Int. Cl.: H01M 4/86, H01M 8/10

(54) **ELECTRODE CATALYST LAYER, MEMBRANE ELECTRODE ASSEMBLY, AND SOLID POLYMER FUEL CELL**

(30) Priority: 15.07.2020 JP 2020121583
(71) Applicant: TOPPAN INC., Tokyo 110-0016 (JP)
(72) Inventor: OZAWA Madoka, Tokyo 110-0016 (JP)
(74) Representative: Hoffmann Eitle
(86) International application number: PCT/JP2021/026668
(87) International publication number: WO 2022/014683

(57) **Abstract**

To provide an electrode catalyst layer, a membrane electrode assembly, and a polymer electrolyte fuel cell capable of improving the mass transport properties and proton conduction properties in the electrode catalyst layer and exhibiting high power generation performance for a long period of time. An electrode catalyst layer (10) according to an embodiment of the present invention is an electrode catalyst layer (10) configured to be bonded to a polymer electrolyte membrane (11) for use in a polymer electrolyte fuel cell (3), the electrode catalyst layer including: a catalytic substance (12); a conductive carrier (13) supporting the catalytic substance (12); a polymer electrolyte (14); and one or more types of fibers (15) containing at least a polymer fiber, wherein, among the fibers (15), the number of fibers (15) having an axis inclination θ of 0°≤θ<45° relative to a bonding surface between the polymer electrolyte membrane (11) and the electrode catalyst layer (10) is more than 50% of the total number of the contained fibers (15).

## Description

### [Technical Field]

The present invention relates to electrode catalyst layers, membrane electrode assemblies, and polymer electrolyte fuel cells.

### [Background Art]

Fuel cells are power generation systems that produce electricity through chemical reactions of hydrogen and oxygen. The fuel cells have features such as high efficiency, low environmental load and low noise compared to conventional power generation systems, and are attracting attention as future clean energy sources. In particular, polymer electrolyte fuel cells usable in the vicinity of room temperature are regarded as promising for use in an in-vehicle power source or a stationary power source for domestic use, and various research and development regarding polymer electrolyte fuel cells has been carried out in recent years. Problems with practical use are, for example, how to improve cell performances such as power generation properties and durability, to build infrastructure, and to reduce production costs.

Polymer electrolyte fuel cells are typically formed of a stack of many single cells. A single cell has a configuration in which a fuel electrode (anode) to which fuel gas is supplied and an oxygen electrode (cathode) to which an oxidizing agent is supplied are respectively bonded to opposite sides of a polymer electrolyte membrane, which is in turn sandwiched between separators having gas flow channels and cooling water flow channels. The fuel electrode (anode) and the oxygen electrode (cathode) are mainly composed of an electrode catalyst layer at least containing a catalytic substance such as platinum group noble metals, a conductive carrier and a polymer electrolyte, and a gas diffusion layer having gas permeability and conductivity.

The polymer electrolyte fuel cells produce electricity through the following electrochemical reactions. First, in the fuel-side electrode catalyst layer, hydrogen contained in a fuel gas is oxidized by the catalytic substance to generate protons and electrons. The generated protons pass through the polymer electrolyte in the electrode catalyst layer and the polymer electrolyte membrane in contact with the electrode catalyst layer to reach the oxygen-side electrode catalyst layer. Further, electrons generated simultaneously pass through the conductive carrier in the fuel-side electrode catalyst layer, the gas diffusion layer in contact with the fuel-side electrode catalyst layer, the separator, and an external circuit to reach the oxygen-side electrode catalyst layer. In the oxygen-side electrode catalyst layer, the protons and electrons react with oxygen contained in an oxidant gas such as air, and generate water. In the above series of reactions, the proton conduction resistance is larger than the electron conduction resistance, so efficient proton conduction is important to improve the reactivity and the performance as a fuel cell.

The gas diffusion layer has the role of diffusing gas supplied from the separator to supply the gas into the electrode catalyst layer. The pores in the electrode catalyst layer are located adjacent to the separator with the gas diffusion layer therebetween, and serve as channels for transporting a plurality of substances. The pores in the fuel electrode are expected to smoothly supply hydrogen contained in the fuel gas to triple phase boundaries, which are redox reaction fields. Further, the pores in the oxygen electrode are expected to smoothly supply oxygen contained in the oxidant gas. Moreover, the pores in the oxygen electrode are expected to smoothly discharge water generated by the reactions. For smooth supply of the gas and smooth discharge of the generated water, it is important that the electrode catalyst layer has gaps sufficient to smoothly discharge the generated water and does not have a dense structure.

For example, an electrode catalyst layer containing carbon with different particle sizes or carbon fibers is proposed as a solution for controlling the structure of the electrode catalyst layer so as not to become dense and improving the power generation performance (see e.g. PTLs 1 and 2).

In PTL 1, carbon particles with particle sizes appropriately different from each other are combined to prevent the carbon particles from being densely packed in the electrode catalyst layer. Further, in PTL 2, carbon fibers having fiber lengths different from each other are contained at a ratio within a predetermined range so that most pores in the electrode catalyst layer have appropriate sizes. On the other hand, mixing large particles having a large particle size and small particles having a small particle size may cause dense packing due to the small particles being caught in the gaps between the large particles. Further, although the use of carbon fibers can prevent dense packing, the ratio of the electron conductor in the catalyst layer increases and the ratio of the proton conductor decreases, resulting in an increase in proton transfer resistance. This may cause deterioration of power generation performance. Also, in these techniques, the pores in the electrode catalyst layer are not likely to be dense, but the shapes of pores in the electrode catalyst layer are not taken into account. Since the power generation performance of fuel cells largely depends on the mass transport properties, electron conduction properties and proton conduction properties, there is a limit in increasing the power generation performance by enhancing electron conduction properties by using combinations of carbon particles and carbon fibers.

### [Citation List]

### [Patent Literature]

PTL 1: JP 3617237 B
PTL 2: JP 5537178 B

### [Summary of the Invention]

### [Technical Problem]

The present invention has been made in view of the above points, and aims to provide an electrode catalyst layer, a membrane electrode assembly, and a polymer electrolyte fuel cell capable of improving the mass transport properties and proton conduction properties in the electrode catalyst layer and exhibiting high power generation performance for a long period of time.

### [Solution to Problem]

In order to overcome the above issues, an electrode catalyst layer according to an aspect of the present invention is an electrode catalyst layer configured to be bonded to a polymer electrolyte membrane for use in a polymer electrolyte fuel cell, the electrode catalyst layer including: a catalytic substance; a conductive carrier supporting the catalytic substance; a polymer electrolyte; and one or more types of fibers containing at least a polymer fiber, wherein, among the fibers, the number of fibers having an axis inclination θ of 0°≤θ<45° relative to a bonding surface between the polymer electrolyte membrane and the electrode catalyst layer is more than 50% of the total number of the contained fibers.

Further, in the electrode catalyst layer according to an aspect of the present invention, the number of fibers having an axis inclination θ of 45°≤θ<90° relative to a bonding surface between the polymer electrolyte membrane and the electrode catalyst layer is more than 5% of the total number of the contained fibers.

### [Advantageous Effects of the Invention]

According to the electrode catalyst layer of the present invention, it is possible to provide an electrode catalyst layer, a membrane electrode assembly, and a polymer electrolyte fuel cell capable of improving the mass transport properties and proton conduction properties in the electrode catalyst layer and exhibiting high power generation performance for a long period of time.

### [Brief Description of the Drawings]

Fig. 1 is a diagram illustrating a void formed by fibers.
Fig. 2 is a schematic cross-sectional view of an example configuration of an electrode catalyst layer according to the present embodiment.
Fig. 3 is a diagram illustrating an axis inclination θ of a fiber.
Fig. 4 illustrates an example configuration of a membrane electrode assembly according to the present embodiment, in which Fig. 4(a) is a plan view of a membrane electrode assembly as viewed from an oxygen electrode-side of an electrode catalyst layer, and Fig. 4(b) is a cross-sectional view taken along the line X-X' of Fig. 4(a).
Fig. 5 is an exploded perspective view of an example configuration of a polymer electrolyte fuel cell according to the present embodiment.

### [Description of the Embodiments]

With reference to the drawings, some embodiments of the present invention will be described. It should be noted that the present invention is not limited to the following embodiments. Modifications such as design modifications can be made on the basis of the knowledge of a person skilled in the art, and embodiments with such modifications are also included in the scope of the present invention. Also, the dimensions in the drawings are exaggerated as appropriate for ease of understanding.

The present inventors have diligently conducted studies on the initial power generation performance and power generation performance durability of polymer electrolyte fuel cells and found that these performances are largely affected by gas diffusion properties and proton conduction properties of the electrode catalyst layer. When fibers containing at least a polymer fiber are used to form voids that are wide in the in-plane direction perpendicular to the film thickness direction of the electrode catalyst layer, the proton conduction resistance is reduced and the gas diffusion properties in the in-plane direction are improved. As a result, the inventors have succeeded in obtaining polymer electrolyte fuel cells that suppress decrease in output and deterioration of the electrode catalyst layer and exhibit high power generation performance for a long period of time.

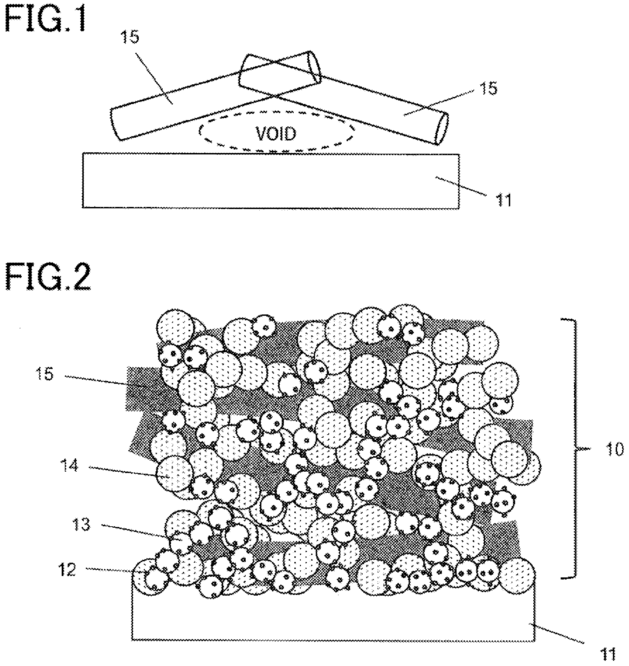

Fig. 1 is a diagram illustrating a void formed by fibers. A plurality of fibers 15 overlapping each other form a void between the fibers 15. Conventionally, the inclination of the fibers 15 has not been considered, but the present inventors have studied the case where two fibers 15 are adjacent to each other as shown in Fig. 1, and found that a void that is wide in the in-plane direction perpendicular to the film thickness direction is likely to be formed between the fibers 15 when one of the two fibers 15 has an axis inclination smaller than 45 degrees, particularly when both the fibers 15 have an axis inclination smaller than 45 degrees, contributing to improvement in gas diffusion properties and in-plane uniform power generation. The present inventors have further found that suitable voids are formed in the in-plane direction perpendicular to the film thickness direction and proton transfer resistance in the film thickness direction is reduced when the number of fibers 15 having an axis inclination larger than 45 degrees and smaller than 90 degrees is more than 5% of the total number of contained fibers.

### [Configuration of Electrode Catalyst Layer]

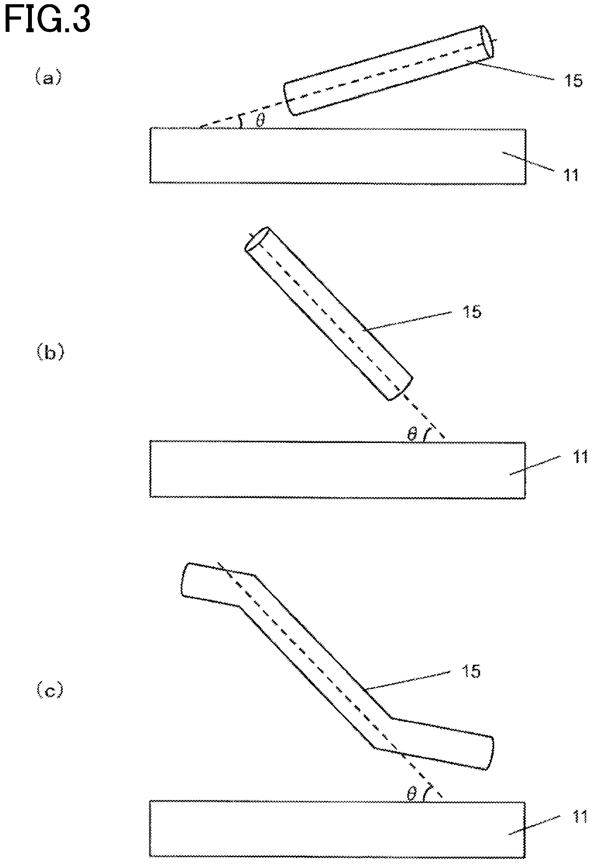

Next, with reference to Figs. 2 and 3, a specific configuration of the electrode catalyst layer according to the present embodiment will be described. Fig. 2 is a schematic cross-sectional view of an example configuration of an electrode catalyst layer according to the present embodiment. Fig. 3 is a diagram illustrating an axis inclination θ of a fiber. As shown in the schematic diagram of Fig. 2, an electrode catalyst layer 10 according to the present embodiment is bonded to a surface of a polymer electrolyte membrane 11, and includes catalytic substances 12, conductive carriers 13, polymer electrolytes 14 and the fibers 15. Portions where none of the above components are present are voids.

The electrode catalyst layer 10 according to the present embodiment is configured such that the number of fibers 15 having an axis inclination θ of 0°≤θ<45° relative to a bonding surface of the polymer electrolyte membrane 11 is more than 50% of the total number of fibers contained in the electrode catalyst layer 10. Preferably, the number of fibers 15 having an axis inclination θ of 0°≤θ<30° is more than 50% of the total number of contained fibers, and more preferably, the number of fibers 15 having an axis inclination θ of 0°≤θ<20° is more than 50% of the total number of contained fibers. When the number of fibers 15 having the axis inclination θ of 0°≤θ<45° is less than 50% of the total number of fibers contained in the electrode catalyst layer 10, voids extending in the in-plane direction perpendicular to the film thickness direction may be so narrow that sufficient water discharge and gas diffusion properties cannot be ensured.

Further, the number of fibers 15 having an axis inclination θ of 45°≤θ<90° is preferably more than 5%, and more preferably more than 5% and 15% or less, of the total number of fibers contained in the electrode catalyst layer 10. When the number of fibers 15 having the axis inclination θ of 45°≤θ<90° is less than 5% of the total number of contained fibers, proton transfer resistance in the film thickness direction may not be sufficiently reduced. In this case, gas diffusion properties and uniformity of in-plane power generation may not be improved.

The axis inclination θ may be determined, for example, in observation of a cross-section of the electrode catalyst layer 10 using a scanning electron microscope (SEM), by using the fibers 15 whose fiber length exposed to the cross-section is 1 µm or more and fiber diameter is 100 nm or more. This facilitates formation of voids that ensure sufficient water discharge and gas diffusion properties in the electrode catalyst layer 10. Further, the bonding surface between the polymer electrolyte membrane 11 and the electrode catalyst layer 10, which serves as a reference for determining the axis inclination θ of the fiber 15, can be seen as a boundary between the polymer electrolyte membrane 11 and the electrode catalyst layer 10 when observing the cross-section of the electrode catalyst layer 10 using a scanning electron microscope (SEM), for example. When the boundary has a large unevenness, the line approximated by the most average straight line is used as the reference.

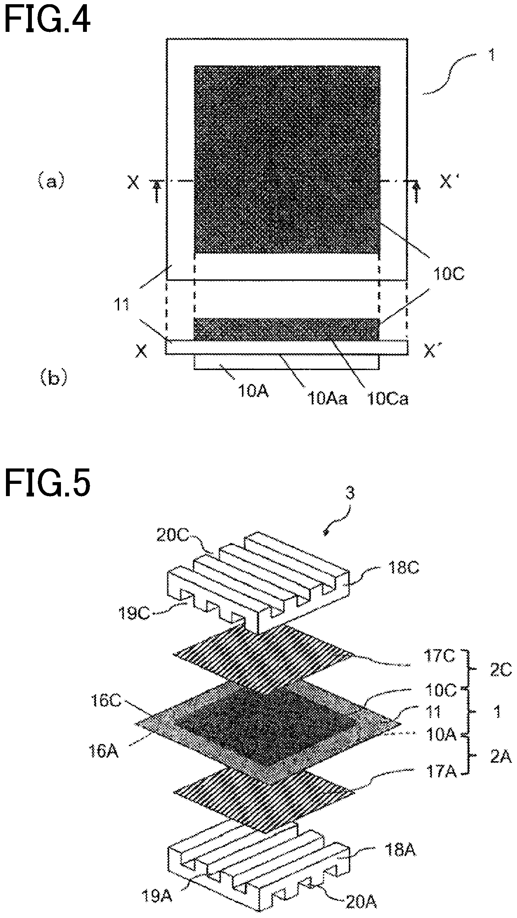

As will be described in detail later with reference to Figs. 4 and 5, the reference surface, which is the bonding surface between the polymer electrolyte membrane 11 and the electrode catalyst layer 10, is a surface of the polymer electrolyte membrane 11 in contact with the electrode catalyst layer 10, in other words, a surface parallel to surfaces 10Aa and 10Ca of the respective electrode catalyst layers 10 bonded to the surfaces of the polymer electrolyte membrane 11. Further, when the electrode catalyst layer 10 has a uniform thickness, the reference surface is a surface parallel to a surface of the electrode catalyst layer 10 on a side in contact with the gas diffusion layer 17. Thus, the axis inclination θ of the fiber 15 can be obtained by using, as a reference surface, any one of the surface of the polymer electrolyte membrane 11, the surfaces 10Aa and 10Ca of the respective electrode catalyst layers 10 bonded to the surfaces of the polymer electrolyte membrane 11, and the surface of the electrode catalyst layer 10 on a side in contact with the gas diffusion layer 17.

The following description will be given of the axis inclination θ of the fiber 15 relative to the reference surface. Fig. 3 is a schematic diagram illustrating the axis inclination θ of the fiber 15 relative to the surface of the polymer electrolyte membrane 11. In Fig. 3, the dotted line indicates the axis of the fiber 15, and an angle formed between the axis of the fiber 15 and the surface of the polymer electrolyte membrane 11 is an axis inclination θ of the fiber 15 relative to the reference surface. As shown in Figs. 3(a) and 3(b), regardless of the inclination direction of the fiber 15, the inclination θ is an acute angle within the range of 0°≤θ≤90°. The fibers 15 are not oriented in the same direction. That is, the axis inclinations θ of the fibers 15 simultaneously contained in the electrode catalyst layer are not all the same, and may be various values within the range of 0°≤θ≤90°.

In the example described referring to Figs. 3(a) and 3(b), the fiber 15 has a straight shape and is not branched. However, the actual axis of the fibers 15 may be bent in multiple steps or branched, or may be curved. In the case of the axis being bent in steps or branched, as shown in Fig. 3(c), the same effect can be achieved when a linear portion of the fiber 15 having the longest length satisfies the above range. Further, in the case of the axis being curved, a largest contact surface of the fiber 15 is referred to as a standard surface, and the same effect can be achieved when the inclination θ of the standard surface of the fiber 15 relative to the reference surface satisfies the above range.

The axis inclination θ of the fiber 15 relative to the reference surface can be measured by, for example, observing a cross-section of the membrane electrode assembly 1 in which the electrode catalyst layer 10 is bonded to the surface of the polymer electrolyte membrane 11 with a scanning electron microscope (SEM). For example, first, the orientation of a sample is adjusted so that the bonding surface between the polymer electrolyte membrane 11 and the electrode catalyst layer 10 becomes horizontal in the field of view at an observation magnification of 1,000x, and then, the inclinations of the fibers whose fiber length exposed to the observed cross-section is 1 µm or more and fiber diameter is 100 nm or more are measured in the field of view at an observation magnification of 10,000x. Thus, the axis inclinations θ of the fibers 15 can be obtained. Preferably, the above measurement can be performed at at least 20 observation points in order to evenly obtain the inclinations of axes of the fibers 15 in the catalyst layer.

The cross-section of the membrane electrode assembly 1 can be exposed by known methods such as ion milling, ultramicrotomy, and the like. The processing for exposing the cross-section is preferably performed while cooling the membrane electrode assembly 1 in order to reduce damage to the polymer electrolyte membrane 11 and the polymer electrolyte 14 constituting the electrode catalyst layer 10. In particular, from the perspective of reducing damage to the polymer electrolyte membrane 11 and the polymer electrolyte 14 constituting the electrode catalyst layer 10 and obtaining a clear cross-section, cryo ion milling is preferably used.

The electrode catalyst layer 10 preferably has a thickness of 5 µm or more and 20 µm or less. If the thickness is more than 20 µm, cracking is likely to occur, and, when used in fuel cells, the diffusion properties for gas and produced water and the conductivity are reduced, resulting in a decrease in the output. If the thickness is less than 5 µm, the layer thickness tends to vary, and the catalytic substances 12 and the polymer electrolytes 14 inside tend to be non-uniform. An electrode catalyst layer 10 having cracking on the surface or non-uniformity in thickness is not preferred since the durability is adversely affected when used as a fuel cell and operated for a long period of time.

The thickness of the electrode catalyst layer 10 can be measured by, for example, observing the cross-section of the membrane electrode assembly 1 with a scanning electron microscope (SEM). For example, the measurement can be performed by measuring the thickness of the electrode catalyst layer in the field of view in which the entire electrode catalyst layer is seen at an observation magnification of approximately 1,000x to 10,000x. Preferably, the above measurement can be performed at at least 20 observation points in order to evenly obtain the thicknesses in the catalyst layer. The cross-section of the membrane electrode assembly 1 can be exposed by known methods such as ion milling, ultramicrotomy, and the like.

Examples of the catalytic substance 12 according to the present embodiment include platinum group elements, metals, and alloys, oxides, complex oxides and carbides thereof. The platinum group elements include platinum, palladium, ruthenium, iridium, rhodium and osmium. Examples of the metals include iron, lead, copper, chromium, cobalt, nickel, manganese, vanadium, molybdenum, gallium and aluminum.

The conductive carrier 13 may be any material that is conductive and capable of supporting the catalytic substance 12 without being affected by the catalytic substance 12 and the polymer electrolyte 14. Typically, carbon particles are used as the conductive carrier 13. Examples of the carbon particles include carbon black, graphite, black lead, activated carbon, carbon nanotubes, carbon nanofibers, and fullerenes.

The particle size of the carbon particles is preferably approximately 10 to 1,000 nm, and more preferably approximately 10 to 100 nm. Carbon particles having too small particle sizes may be too densely packed in the electrode catalyst layer 10 and reduce the gas diffusion properties of the electrode catalyst layer 10, and carbon particles having too large particle sizes may cause cracking in the electrode catalyst layer 10 and reduce the utilization rate of the catalyst, which are not preferred. The particle size of the carbon particles is a volume average particle size determined by a laser diffraction/scattering method.

The polymer electrolyte 14 contained in the polymer electrolyte membrane 11 and the electrode catalyst layer 10 may be any material that is proton-conductive, and examples thereof include a fluorine-based polymer electrolyte and a hydrocarbon-based polymer electrolyte. The fluorine-based polymer electrolyte may be a polymer electrolyte having a tetrafluoroethylene backbone, such as Nafion (registered trademark) manufactured by DuPont. Further, examples of the hydrocarbon-based polymer electrolyte include sulfonated polyether ketones, sulfonated polyether sulfones, sulfonated polyether ether sulfones, sulfonated polysulfides, sulfonated polyphenylenes, and the like. The polymer electrolyte 14 contained in the polymer electrolyte membrane 11 and the polymer electrolyte 14 contained in the electrode catalyst layer 10 may be the same or different from each other. Considering interface resistance between the polymer electrolyte membrane 11 and the electrode catalyst layer 10 and dimensional change of the polymer electrolyte membrane 11 and the electrode catalyst layer 10 during humidity change, it is preferred that the polymer electrolyte 14 contained in the polymer electrolyte membrane 11 and the polymer electrolyte 14 contained in the electrode catalyst layer 10 are the same or similar components.

The fiber 15 may be any material that can maintain its fibrous shape without being affected by the catalytic substance 12 and the polymer electrolyte 14, and examples thereof include nanofibers formed by processing polymer compounds, carbon, or conductive oxides into a fibrous shape. As the fiber 15, only one of fibers described below may be singly used, or two or more thereof may be used in combination. From the perspective of improving both the mass transport properties and proton conduction properties in the electrode catalyst layer 10, it is preferred that at least a polymer fiber having proton conduction properties or basicity is contained.

Examples of the polymer fibers according to the present embodiment include nanofibers obtained by processing polymer electrolytes having proton conduction properties into a fibrous shape. For example, fluorine-based polymer electrolytes and hydrocarbon-based polymer electrolytes can be used. Examples of the fluorine-based polymer electrolytes include Nafion (registered trademark) manufactured by DuPont, Flemion (registered trademark) manufactured by Asahi Glass Co., Ltd, Aciplex (registered trademark) manufactured by Asahi Kasei Corporation, Gore-Select (registered trademark) manufactured by Gore. Examples of the hydrocarbon-based polymer electrolytes include electrolytes such as sulfonated polyether ketones, sulfonated polyether sulfones, sulfonated polyether ether sulfones, sulfonated polysulfides and sulfonated polyphenylenes. Further, acid-doped polybenzoxazoles that exhibit proton conduction properties when doped with an acid can also be suitably used.

Examples of the polymer fibers according to the present embodiment further include nanofibers obtained by processing polymer compounds having basicity into a fibrous shape. For example, polymer fibers having an azole structure, such as imidazole, thiazole and oxazole, a pyrrole ring, a pyridine ring, and the like can be used. When the basic functional groups contained in the polymer fibers and the acidic proton-conductive sites such as sulfonyl groups contained in the polymer electrolyte 14 bind to each other by acid-base bonds, the polymer fibers can be coated with a polymer electrolyte. In particular, the polymer fibers are uniformly coated with the polymer electrolyte 14 since it has the basic functional groups containing nitrogen (N) atoms in the molecular structure, improving both the mass transport properties and proton conduction properties in the electrode catalyst layer 10.

Examples of the electron-conductive fibers according to the present embodiment include carbon fibers, carbon nanotubes, carbon nanohorns, conductive polymer nanofibers, and the like. In particular, carbon nanofibers are preferred from the perspective of conduction and dispersion properties. Further, the use of electron-conductive fibers having catalytic ability is more preferred since it reduces the used amount of catalyst made of a noble metal. For example, a carbon alloy catalyst made of carbon nanofibers can be used as an air electrode of polymer electrolyte fuel cells. Alternatively, an electrode active material for an oxygen-reduction electrode may be processed into a fibrous shape. For example, substances containing at least one transition metal element selected from Ta, Nb, Ti and Zr may be used. Partial oxides of carbonitrides of these transition metal elements, or conductive oxides and conductive oxynitrides of these transition metal elements are examples.

The average fiber diameter of the fibers 15 is preferably 10 nm to 500 nm, and more preferably 100 nm to 400 nm. Setting the average fiber diameter within the above range increases the number of voids in the electrode catalyst layer 10 and suppresses a decrease in proton conduction properties, resulting in high output.

Further, the average fiber length of the fibers 15 is preferably 1 µm to 100 µm, and more preferably 5 µm to 50 µm. Setting the average fiber length within the above range increases the strength of the electrode catalyst layer 10, and thus reduces occurrence of cracking when forming the electrode catalyst layer 10. This also increases the voids in the electrode catalyst layer 10, resulting in high output.

### [Configuration of Membrane Electrode Assembly]

Next, with reference to Fig. 4, a specific configuration of the membrane electrode assembly 1 having the electrode catalyst layer 10 according to the present embodiment will be described. Fig. 4 illustrates an example configuration of a membrane electrode assembly according to the present embodiment, in which (a) is a plan view of the membrane electrode assembly as viewed from an oxygen electrode-side of the electrode catalyst layer 10, and (b) is a cross-sectional view taken along the line X-X' of (a).

As shown in Fig. 4, the membrane electrode assembly 1 includes the polymer electrolyte membrane 11, and electrode catalyst layers 10C and 10A bonded to the respective surfaces of the polymer electrolyte membrane 11. A surface of the electrode catalyst layer 10C bonded to a surface of the polymer electrolyte membrane 11 is 10Ca, and a surface of the electrode catalyst layer 10A bonded to another surface of the polymer electrolyte membrane 11 is 10Aa. In the present embodiment, the electrode catalyst layer 10C formed on the upper side of the polymer electrolyte membrane 11 is a cathode-side electrode catalyst layer constituting the oxygen electrode, and the electrode catalyst layer 10A formed on the lower side of the polymer electrolyte membrane 11 is an anode-side electrode catalyst layer constituting the fuel electrode. Hereinafter, a pair of catalyst layers 10C and 10A may be simply referred to as a "catalyst layer 10" when there is no need to distinguish them. The periphery of the catalyst layer 10 may be sealed with a gasket or the like (not shown).

### [Methods for Producing Electrode Catalyst Layer and Membrane Electrode Assembly]

The following description will be given of the methods for producing the above-mentioned electrode catalyst layer 10 and membrane electrode assembly 1. First, a catalyst ink is prepared. At least the catalytic substance 12, the conductive carrier 13, the polymer electrolyte 14 and the fiber 15 described above are mixed in a dispersion medium, and the mixture is then subjected to a dispersion treatment to prepare a catalyst ink. The dispersion treatment can be performed using, for example, a planetary ball mill, a bead mill, an ultrasonic homogenizer, or the like.

There is no particular limitation on the solvent used as the dispersion medium of the catalyst ink as long as the solvent does not erode the catalytic substance 12, the conductive carrier 13, the polymer electrolyte 14 or the fiber 15, and is capable of dissolving the polymer electrolyte 14 in a highly fluid state or dispersing the polymer electrolyte 14 as a fine gel. The solvent may include water. Although the catalyst ink preferably contains at least a volatile organic liquid solvent, the use of a lower alcohol as a solvent increases the risk of ignition. Therefore, when such a solvent is used, a mixed solvent with water is preferred. The additive amount of water is not specifically limited as long as the polymer electrolyte 14 does not separate and cause turbidity or gelation.

The prepared catalyst ink is applied to a substrate, and then dried to remove the solvent components from the coating film of the catalyst ink, whereby an electrode catalyst layer 10 is formed on the substrate. The polymer electrolyte membrane 11, a transfer substrate, the gas diffusion layer 17, or the like can be used as the substrate. When the polymer electrolyte membrane 11 is used as the substrate, for example, the catalyst ink can be directly applied to a surface of the polymer electrolyte membrane 11, and then the solvent components are removed from the coating film of the catalyst ink to form an electrode catalyst layer 10C. Then, the catalyst ink can be directly applied to a surface of the polymer electrolyte membrane 11 on a side opposite to that facing the electrode catalyst layer 10A, and then the solvent is removed from the coating film of the catalyst ink to form an electrode catalyst layer 10A. Thus, a membrane electrode assembly 1 can be obtained.

When a transfer substrate is used, for example, the catalyst ink is applied to the transfer substrate and then dried to form a transfer substrate having a catalyst layer. Then, a surface of the electrode catalyst layer 10 in the transfer substrate having a catalyst layer is brought into contact with the polymer electrolyte membrane 11, followed by heating and pressurization to bond the electrode catalyst layer 10 to the polymer electrolyte membrane 11. By bonding the electrode catalyst layer 10 to both surfaces of the polymer electrolyte membrane 11, and then removing the transfer substrate, a membrane electrode assembly 1 can be produced.

Furthermore, when the gas diffusion layer 17 is used as the substrate, for example, the catalyst ink is applied to a surface of the gas diffusion layer 17 and then dried to form a gas diffusion layer 17 having a catalyst layer. Then, a surface of the electrode catalyst layer 10 in the gas diffusion layer 17 having a catalyst layer is brought into contact with the polymer electrolyte membrane 11, followed by heating and pressurization to bond the electrode catalyst layer 10 to the polymer electrolyte membrane 11. By bonding the electrode catalyst layer 10 to both surfaces of the polymer electrolyte membrane 11, a membrane electrode assembly 1 can be produced.

The catalyst ink can be applied to the substrate by various coating methods. Examples of the coating methods include die coating, roll coating, curtain coating, spray coating, squeegee coating, and the like. The coating method is preferably die coating. Die coating is preferred since the film thickness in the middle of the coating period is stable, and intermittent coating can be performed. The coating film of the catalyst ink can be dried by a drying method, for example, drying using a hot air oven, IR (far infrared) drying, drying using a hot plate, or drying under reduced pressure. The drying temperature is 40°C or more and 200°C or less, and preferably approximately 40°C or more and 120°C or less. The drying time is 0.5 minutes or more and 1 hour or less, and preferably approximately 1 minute or more and 30 minutes or less.

When the electrode catalyst layer 10 is formed on the transfer substrate or the gas diffusion layer 17, the power generation performance of the membrane electrode assembly 1 is affected by the pressure or temperature applied to the electrode catalyst layer 10 when transferring the electrode catalyst layer 10. For obtaining a membrane electrode assembly 1 having high power generation performance, the pressure applied to the electrode catalyst layer 10 is preferably 0.1 MPa or more and 20 MPa or less. The pressure of 20 MPa or less can prevent the electrode catalyst layer 10 from being excessively compressed. The pressure of 0.1 MP or more can prevent bonding between the electrode catalyst layer 10 and the polymer electrolyte membrane 11 from decreasing and thus prevent the power generation performance from decreasing. From the perspective of improving bonding at the interface between the polymer electrolyte membrane 11 and the electrode catalyst layer 10 and suppressing the interface resistance, the bonding temperature is preferably near the glass transition point of the polymer electrolyte membrane 11 or the polymer electrolyte 14 contained in the electrode catalyst layer 10.

As the transfer substrate, for example, a polymer film or a sheet made of fluororesin can be used. Fluororesins are excellent in transferability. Examples of the fluororesins include ethylene tetrafluoroethylene copolymers (ETFE), tetrafluoroethylene-hexafluoropropylene copolymers (FEP), tetrafluoroperfluoroalkyl vinyl ether copolymers (PFA), and polytetrafluoroethylene (PTFE). Examples of polymers constituting the polymer film include polyimides, polyethylene terephthalates, polyamides (Nylon (registered trademark)), polysulfones, polyethersulfones, polyphenylene sulfides, polyether ether ketones, polyetherimides, polyarylates, and polyethylene naphthalates.

The compounding ratio of the fiber 15, the compounding ratio of the polymer electrolyte 14, the solvent composition of the catalyst ink, the dispersion intensity in adjusting the catalyst ink, and the heating temperature and heating rate of the applied catalyst ink can be adjusted so that the axis inclinations θ of the fibers 15 contained in the electrode catalyst layer 10 become within the range described above to provide sufficient gas diffusion properties and proton conduction properties.

For example, the compounding ratio of the polymer electrolyte 14 in the electrode catalyst layer 10 is preferably about the same to about half the weight of the conductive carrier 13. Further, the compounding ratio of the fiber 15 in the electrode catalyst layer 10 is preferably approximately 1 mass% or more and 10 mass% or less. When the compounding ratio of the fiber 15 in the electrode catalyst layer 10 is less than 1 mass%, the effect of reducing the proton conduction resistance and improving the gas diffusion properties cannot be sufficiently achieved, and cracking may occur when forming the electrode catalyst layer 10, resulting in a decrease in durability during long-term operation. On the other hand, when the compounding ratio of the fiber 15 in the electrode catalyst layer 10 is more than 10 mass%, the catalytic reaction may be inhibited, resulting in a decrease in the battery performance. The solid content ratio of the catalyst ink is preferably high as long as it can form a thin coating film.

### [Configuration of Polymer Electrolyte Fuel Cell]

Next, with reference to Fig. 5, a specific configuration example of the polymer electrolyte fuel cell 3 having the membrane electrode assembly 1 according to the present embodiment will be described. Fig. 5 is an exploded perspective view of an example configuration of the polymer electrolyte fuel cell 3 that includes the membrane electrode assembly 1. It should be noted that although Fig. 5 illustrates an example configuration of a single cell, the polymer electrolyte fuel cell 3 is not limited to this configuration and may have a configuration in which a plurality of single cells are stacked.

As shown in Fig. 5, the polymer electrolyte fuel cell 3 includes the membrane electrode assembly 1, a gas diffusion layer 17C and a gas diffusion layer 17A. The gas diffusion layer 17C is located to face the electrode catalyst layer 10C which is a cathode-side electrode catalyst layer on the oxygen electrode side of the membrane electrode assembly 1. The gas diffusion layer 17A is located to face the electrode catalyst layer 10A which is an anode-side electrode catalyst layer on the fuel electrode side of the membrane electrode assembly 1. The electrode catalyst layer 10C and the gas diffusion layer 17C constitute an oxygen electrode 2C, and the electrode catalyst layer 10A and the gas diffusion layer 17A constitute a fuel electrode 2A. A gasket 16C on the oxygen electrode side and a gasket 16A on the fuel electrode side are disposed to prevent gas leakage from the periphery of the polymer electrolyte membrane 11 where the electrode catalyst layers 10 are not bonded.

Furthermore, the polymer electrolyte fuel cell 3 includes a separator 18C located to face the oxygen electrode 2C, and a separator 18A located to face the fuel electrode 2A. The separator 18C includes gas flow channels 19C for passage of a reaction gas, formed on a surface facing the gas diffusion layer 17C, and cooling water flow channels 20C for passage of a coolant, formed on a surface on a side opposite to that in which the gas flow channels 19C are formed. The separator 18A has the same structure as the separator 18C, and includes gas flow channels 19A formed on a surface facing the gas diffusion layer 17A, and cooling water flow channels 20A formed on a surface on a side opposite to that in which the gas flow channels 19A are formed. The separators 18C and 18A are made of a material electrically conductive and impermeable to gas.

In the polymer electrolyte fuel cell 3, an oxidizing agent such as air or oxygen is supplied to the oxygen electrode 2C through the gas flow channels 19C of the separator 18C, and a fuel gas containing hydrogen or an organic fuel is supplied to the fuel electrode 2A through the gas flow channels 19A of the separator 18A, so that electric power is generated.

By employing the membrane electrode assembly 1 according to the present embodiment, sufficient water discharge, gas diffusion and proton-conductive properties can be achieved, ensuring high power generation performance for a long period of time.

That is, according to the present embodiment, by specifying the axis inclination of the fibers 15, it is possible to provide an electrode catalyst layer 10, a membrane electrode assembly, and a polymer electrolyte fuel cell having sufficient water discharge, gas diffusion and proton-conductive properties in operation of the polymer electrolyte fuel cell, and capable of exhibiting high power generation performance for a long period of time. Therefore, the present invention can be suitable used for stationary cogeneration systems, fuel cell vehicles, and the like that use the polymer electrolyte fuel cells, and has a great industrial utility value.

The following description will be given of the membrane electrode assembly 1 according to the examples (First Example and Second Example) of the present invention.

### (First Example)

### [Example 1-1]

In Example 1-1, a platinum-on-carbon catalyst (TEC10E50E, manufactured by Tanaka Kikinzoku Kogyo K.K.), water, 1-propanol, the polymer electrolyte 14 (Nafion (registered trademark) dispersion, manufactured by Wako Pure Chemical Industries, Ltd.), and electrolyte nanofibers (200 to 400 nm diameter, approx. 30 µm fiber length) were mixed. This mixture was subjected to a dispersion treatment at 500 rpm for 60 minutes using a planetary ball mill (P-7, manufactured by Fritsch). In this process, zirconia balls having a 5 mm diameter were added to about one-third of the zirconia container. The catalyst ink was prepared by adjusting the mass of the polymer electrolyte 14 to 100 mass% relative to the mass of the carbon particles, adjusting the mass of the electrolyte nanofibers to 10 mass% relative to the mass of the carbon particles, adjusting the ratio of the water in the dispersion medium to 50 mass% and the solid content concentration to 10 mass%.

The catalyst ink was applied to a surface on one side of the polymer electrolyte membrane 11 (Nafion (registered trademark) 211, manufactured by DuPont) at 200 µm thickness using a slit die coater to form a coating film. Then, the polymer electrolyte membrane 11 on which the coating film was formed was dried in a hot air oven at 80°C until the tackiness of the coating film was removed to thereby form a cathode-side electrode catalyst layer 10C. Then, the catalyst ink was applied to a surface on the other side of the polymer electrolyte membrane 11 at 50 µm thickness using a slit die coater to form a coating film. Then, the polymer electrolyte membrane 11 on which the coating film was formed was dried in a hot air oven at 80°C until the tackiness of the coating film was removed to thereby form an anode-side electrode catalyst layer 10A. Thus, a membrane electrode assembly 1 of Example 1-1 was obtained.

### [Example 1-2]

A membrane electrode assembly 1 of Example 1-2 was obtained in the same manner as in Example 1-1 except that 10 mass% of carbon nanofibers (VGCF (registered trademark)-H, manufactured by Showa Denko K.K) relative to the mass of the carbon particles was further added when preparing the catalyst ink.

### [Example 1-3]

A membrane electrode assembly 1 of Example 1-3 was obtained in the same manner as in Example 1-1 except that the amount of the electrolyte nanofibers was made twice that of Example 1-1 when preparing the catalyst ink.

### [Example 1-4]

A membrane electrode assembly 1 of Example 1-4 was obtained in the same manner as in Example 1-1 except that the dispersion treatment was performed for 120 minutes instead of 60 minutes when preparing the catalyst ink.

### [Example 1-5]

A membrane electrode assembly 1 of Example 1-5 was obtained in the same manner as in Example 1-1 except that the amount of the polymer electrolyte 14 was made two-thirds of that of Example 1-1 when preparing the catalyst ink.

### [Example 1-6]

A membrane electrode assembly 1 of Example 1-6 was obtained in the same manner as in Example 1-1 except that the catalyst ink was applied at 100 µm thickness when preparing the cathode-side electrode catalyst layer 10C.

### [Example 1-7]

A catalyst ink was prepared in the same manner as in Example 1-1. The catalyst ink was applied to a surface of a PTFE film at 200 µm thickness using a slit die coater to form a coating film. Then, the PTFE film on which the coating film was formed was dried in a hot air oven at 80°C until the tackiness of the coating film was removed to thereby obtain a transfer substrate having a cathode-side electrode catalyst layer 10C. Further, the catalyst ink was applied to a surface of another PTFE film at 50 µm thickness using a slit die coater to form a coating film. Then, the PTFE film on which the coating film was formed was dried in a hot air oven at 80°C until the tackiness of the coating film disappeared to thereby obtain a transfer substrate having an anode-side electrode catalyst layer 10A.

The transfer substrate having a cathode-side electrode catalyst layer 10C and the transfer substrate having an anode-side electrode catalyst layer 10A were disposed on the opposite surfaces of the polymer electrolyte membrane 11 (Nafion (registered trademark) 211, manufactured by DuPont), respectively, so that they face each other while forming a laminate. Then, the laminate was hot-pressed under conditions of 120°C and 1 MPa to bond the electrode catalyst layers 10 to the opposite surfaces of the polymer electrolyte membrane 11, respectively. Finally, the PTFE films were removed from the respective electrode catalyst layers 10 to thereby obtain a membrane electrode assembly 1 of Example 1-7.

### [Comparative Example 1-1]

A membrane electrode assembly 1 of Comparative Example 1-1 was obtained in the same manner as in Example 1-1 except that electrolyte nanofibers were not added when preparing the catalyst ink.

### [Comparative Example 1-2]

A membrane electrode assembly 1 of Comparative Example 1-2 was obtained in the same manner as in Example 1-1 except that the amount of the electrolyte nanofibers was made 10 times that of Example 1-1 when preparing the catalyst ink.

### [Comparative Example 1-3]

A membrane electrode assembly 1 of Comparative Example 1-3 was obtained in the same manner as in Example 1-1 except that the dispersion treatment was performed for 5 minutes instead of 60 minutes when preparing the catalyst ink.

### [Comparative Example 1-4]

A membrane electrode assembly 1 of Comparative Example 1-4 was obtained in the same manner as in Example 1-2 except that electrolyte nanofibers were not added when preparing the catalyst ink.

The results of comparison for the axis inclination θ of the fibers 15 relative to a reference surface and the power generation performance in each of the polymer electrolyte fuel cells 3 having the membrane electrode assemblies 1 of Examples 1-1 to 1-7 and the membrane electrode assemblies 1 of Comparative Examples 1-1 to 1-4 will be described below.

### [Measurement of Axis Inclination θ of Fiber]

The axis inclination θ of the fiber 15 relative to the reference surface was measured by observing the cross-section of the membrane electrode assembly 1 with a scanning electron microscope (SEM). Specifically, first, a small piece of the membrane electrode assembly 1 was adhered to a metal plate, and the cross-section of the electrode catalyst layer 10 was exposed using a cross section polisher IB-19520CCP manufactured by JEOL Ltd. Then, the exposed cross-section was observed using an FE-SEM S-4800 manufactured by Hitachi High Technologies Corporation to measure θ. First, the orientation of the sample was adjusted so that the bonding surface between the polymer electrolyte membrane 11 and the cathode-side electrode catalyst layer 10C became horizontal in the field of view at an observation magnification of 1,000x. Then, the observation region was moved parallel so that the cathode-side electrode catalyst layer 10C came to the center of the field of view, and the inclination of the fiber whose fiber length exposed to the cross-section was 1 µm or more and fiber diameter was 100 nm or more was measured by an angle measurement function in the field of view at an observation magnification of 10,000x. Thus, the axis inclination θ of the fiber 15 was obtained. The measurement was performed at 30 observation points evenly distributed in the catalyst layer. The ratios of the number of fibers 15 having an axis inclination θ of 0°≤θ<45° and the number of fibers 15 having an axis inclination θ of 45°≤θ<90° to the total number of fiber 15 measured at the 30 observation points were calculated.

### [Measurement of Power Generation Performance]

Measurement of power generation performance was performed according to the "Cell Evaluation and Analysis Protocol" which is a publication of New Energy and Industrial Technology Development Organization (NEDO), and a JARI standard cell, in which the gas diffusion layer 17, the gasket 16 and the separator 18 were disposed on both surfaces of the membrane electrode assembly 1, tightened at a predetermined surface pressure was used as a single cell for evaluation. The IV measurement ("standard" condition) described in the "Cell Evaluation and Analysis Protocol" and the I-V measurement ("high humidity" condition) with the relative humidities of the anode and cathode set at RH 100% were performed.

### [Comparison Results]

Table 1 shows the results of comparison for the axis inclination θ of the fiber 15 relative to a reference surface and the power generation performance in each of the polymer electrolyte fuel cells 3 having the membrane electrode assemblies 1 of Examples 1-1 to 1-7 and the membrane electrode assemblies 1 of Comparative Examples 1-1 to 1-4. The inclination θ represents the ratios of the number of fibers 15 having an axis inclination θ of 0°≤θ<45° and the number of fibers 15 having an axis inclination θ of 45°≤θ<90° to the total number of fiber 15 measured at the 30 observation points. Further, the power generation performance in the "standard" condition is rated as "good" when the current at a voltage of 0.6V is 25 A or more, and rated as "poor" when the current is less than 25 A. The power generation performance in the "high humidity" condition is rated as "good" when the current at a voltage of 0.6V is 30 A or more, and rated as "poor" when the current is less than 30 A.

**[Table 1]**

| | 0°≤θ<45° [%] | 45°≤θ<90° [%] | Thickness [µm] | Power generation performance | |
|---|---|---|---|---|---|
| | | | | Standard | High humidity |
| Example 1-1 | 77 | 23 | 14 | good | good |
| Example 1-2 | 82 | 18 | 16 | good | good |
| Example 1-3 | 67 | 33 | 20 | good | good |
| Example 1-4 | 73 | 27 | 12 | good | good |
| Example 1-5 | 72 | 28 | 15 | good | good |
| Example 1-6 | 75 | 25 | 8 | good | good |
| Example 1-7 | 91 | 9 | 10 | good | good |
| Comparative Example 1-1 | 0 | 0 | 12 | poor | poor |
| Comparative Example 1-2 | 48 | 52 | 35 | poor | poor |
| Comparative Example 1-3 | 45 | 55 | 16 | poor | poor |
| Comparative Example 1-4 | unmeasurable | unmeasurable | unmeasurable | unmeasurable | unmeasurable |

As shown in Table 1, in all of Examples 1-1 to 1-7, the ratio of the number of fibers 15 having the axis inclination θ of 0°≤θ<45° relative to the surface of the catalyst layer is more than 50%. The power generation performance is "good" in both the "standard" condition and the "high humidity" condition. That is, in Examples 1-1 to 1-7, a membrane electrode assembly 1 capable of constituting a fuel cell excellent in power generation performance was obtained.

On the other hand, in all of Comparative Examples 1-1 to 1-3, the ratio of the number of fibers 15 having the axis inclination θ of 0°≤θ<45° relative to the surface of the catalyst layer is less than 50%. The power generation performance is "poor" in both the "standard" condition and the "high humidity" condition. That is, when the inclination of the fibers 15 in the electrode catalyst layer 10 becomes out of the predetermined range, the power generation performance is deteriorated. Further, the measurement and evaluation of the electrode catalyst layer in Comparative Example 1-4 could not be performed due to a large number of cracks that had occurred. That is, when the configuration of the fibers 15 in the electrode catalyst layer 10 becomes out of the predetermined range, a membrane electrode assembly 1 capable of constituting a fuel cell was not obtained.

### (Second Example)

### [Example 2-1]

In Example 2-1, a platinum-on-carbon catalyst (TEC10E50E, manufactured by Tanaka Kikinzoku Kogyo K.K.), water, 1-propanol, the polymer electrolyte 14 (Nafion (registered trademark) dispersion, manufactured by Wako Pure Chemical Industries, Ltd.), and polyazole fibers (200 nm average fiber diameter, approx. 30 µm average fiber length) were mixed. This mixture was subjected to a dispersion treatment at 500 rpm for 60 minutes using a planetary ball mill (P-7, manufactured by Fritsch). In this process, zirconia balls having a 5 mm diameter were added to about one-third of the zirconia container. The catalyst ink was prepared by adjusting the mass of the polymer electrolyte 14 to 100 mass% relative to the mass of the carbon particles, adjusting the mass of the polyazole fibers in the solid content to 1 mass%, adjusting the ratio of the water in the dispersion medium to 50 mass% and the solid content concentration to 10 mass%.

The catalyst ink was applied to a surface on one side of the polymer electrolyte membrane 11 (Nafion (registered trademark) 211, manufactured by DuPont) at 150 µm thickness using a slit die coater to form a coating film. Then, the polymer electrolyte membrane 11 on which the coating film was formed was dried in a hot air oven at 80°C until the tackiness of the coating film was removed to thereby form a cathode-side electrode catalyst layer 10C. Then, the catalyst ink was applied to a surface on the other side of the polymer electrolyte membrane 11 at 50 µm thickness using a slit die coater to form a coating film. Then, the polymer electrolyte membrane 11 on which the coating film was formed was dried in a hot air oven at 80°C until the tackiness of the coating film was removed to thereby form an anode-side electrode catalyst layer 10A. Thus, a membrane electrode assembly 1 of Example 2-1 was obtained.

### [Example 2-2]

A membrane electrode assembly 1 of Example 2-2 was obtained in the same manner as in Example 2-1 except that the same mass of carbon nanofibers (VGCF (registered trademark)-H, manufactured by Showa Denko K.K, 150 nm average fiber diameter, approx. 7 µm average fiber length) as that of the polyazole fibers was further added when preparing the catalyst ink.

### [Example 2-3]

A membrane electrode assembly 1 of Example 2-3 was obtained in the same manner as in Example 2-1 except that the amount of the polyazole fibers was made five times that of Example 2-1 when preparing the catalyst ink.

### [Example 2-4]

A membrane electrode assembly 1 of Example 2-4 was obtained in the same manner as in Example 2-1 except that the dispersion treatment was performed for 120 minutes instead of 60 minutes when preparing the catalyst ink.

### [Example 2-5]

A membrane electrode assembly 1 of Example 2-5 was obtained in the same manner as in Example 2-1 except that the amount of the polymer electrolyte 14 was made half of that of Example 2-1 when preparing the catalyst ink.

### [Example 2-6]

A membrane electrode assembly 1 of Example 2-6 was obtained in the same manner as in Example 2-1 except that the catalyst ink was applied at 100 µm thickness when preparing the cathode-side electrode catalyst layer 10C.

### [Example 2-7]

A catalyst ink was prepared in the same manner as in Example 2-1. The catalyst ink was applied to a surface of a PTFE film at 150 µm thickness using a slit die coater to form a coating film. Then, the PTFE film on which the coating film was formed was dried in a hot air oven at 80°C until the tackiness of the coating film was removed to thereby obtain a transfer substrate having a cathode-side electrode catalyst layer 10C. Further, the catalyst ink was applied to a surface of another PTFE film at 50 µm thickness using a slit die coater to form a coating film. Then, the PTFE film on which the coating film was formed was dried in a hot air oven at 80°C until the tackiness of the coating film disappeared to thereby obtain a transfer substrate having an anode-side electrode catalyst layer 10A.

The transfer substrate having a cathode-side electrode catalyst layer 10C and the transfer substrate having an anode-side electrode catalyst layer 10A were disposed on the opposite surfaces of the polymer electrolyte membrane 11 (Nafion (registered trademark) 211, manufactured by DuPont), respectively, so that they face each other while forming a laminate. Then, the laminate was hot-pressed under conditions of 120°C and 1 MPa to bond the electrode catalyst layers 10 to the opposite surfaces of the polymer electrolyte membrane 11, respectively. Finally, the PTFE films were removed from the respective electrode catalyst layers 10 to thereby obtain a membrane electrode assembly 1 of Example 2-7.

### [Example 2-8]

A membrane electrode assembly 1 of Example 2-8 was obtained in the same manner as in Example 2-1 except that the polyazole fibers (500 nm average fiber diameter, approx. 30 µm average fiber length) was added instead of the polyazole fibers (200 nm average fiber diameter, approx. 30 µm average fiber length) when preparing the catalyst ink.

### [Example 2-9]

A membrane electrode assembly 1 of Example 2-9 was obtained in the same manner as in Example 2-1 except that the catalyst ink was applied at 300 µm thickness when preparing the cathode-side electrode catalyst layer 10C.

### [Comparative Example 2-1]

A membrane electrode assembly 1 of Comparative Example 2-1 was obtained in the same manner as in Example 2-1 except that polyazole fibers were not added when preparing the catalyst ink.

### [Comparative Example 2-2]

A membrane electrode assembly 1 of Comparative Example 2-2 was obtained in the same manner as in Example 2-1 except that the amount of the polyazole fibers was made 15 times that of Example 2-1 when preparing the catalyst ink.

### [Comparative Example 2-3]

A membrane electrode assembly 1 of Comparative Example 2-3 was obtained in the same manner as in Example 2-1 except that the dispersion treatment was performed for 5 minutes instead of 60 minutes when preparing the catalyst ink.

### [Comparative Example 2-4]

A membrane electrode assembly 1 of Comparative Example 2-4 was obtained in the same manner as in Example 2-1 except that carbon nanofibers were added instead of the polyazole fibers when preparing the catalyst ink.

The results of comparison for the axis inclination θ of the fiber 15 relative to a reference surface and the power generation performance in each of the polymer electrolyte fuel cells 3 having the membrane electrode assemblies 1 of Examples 2-1 to 2-9 and the membrane electrode assemblies 1 of Comparative Examples 2-1 to 2-4 will be described below.

### [Measurement of Axis Inclination θ of Fiber]

The axis inclination θ of the fiber 15 relative to the reference surface was measured by observing the cross-section of the membrane electrode assembly 1 with a scanning electron microscope (SEM). Specifically, first, a small piece of the membrane electrode assembly 1 was adhered to a metal plate, and the cross-section of the electrode catalyst layer 10 was exposed using a cross section polisher IB-19520CCP manufactured by JEOL Ltd. Then, the exposed cross-section was observed using an FE-SEM S-4800 manufactured by Hitachi High Technologies Corporation to measure θ. First, the orientation of the sample was adjusted so that the bonding surface between the polymer electrolyte membrane 11 and the cathode-side electrode catalyst layer 10C became horizontal in the field of view at an observation magnification of 1,000x. Then, the observation region was moved parallel so that the cathode-side electrode catalyst layer 10C came to the center of the field of view, and the inclination of the fiber whose fiber length exposed to the cross-section was 1 µm or more and fiber diameter was 100 nm or more was measured by an angle measurement function in the field of view at an observation magnification of 10,000x. Thus, the axis inclination θ of the fiber 15 was obtained. The measurement was performed at 30 observation points evenly distributed in the catalyst layer. The ratios of the number of fibers 15 having an axis inclination θ of 0°≤θ<45° and the number of fibers 15 having an axis inclination θ of 45°≤θ<90° to the total number of fiber 15 measured at the 30 observation points were calculated.

That is, the axis inclination θ of the fiber was measured in the same manner as in First Example.

### [Measurement of Power Generation Performance]

Measurement of power generation performance was performed according to the "Cell Evaluation and Analysis Protocol" which is a publication of New Energy and Industrial Technology Development Organization (NEDO), and a JARI standard cell, in which the gas diffusion layer 17, the gasket 16 and the separator 18 were disposed on both surfaces of the membrane electrode assembly 1, tightened at a predetermined surface pressure was used as a single cell for evaluation. The IV measurement ("standard" condition) described in the "Cell Evaluation and Analysis Protocol" and the I-V measurement ("high humidity" condition) with the relative humidities of the anode and cathode set at RH 100% were performed.

That is, the power generation performance was measured in the same manner as in First Example.

### [Comparison Results]

Table 2 shows the results of comparison for the axis inclination θ of the fiber 15 relative to a reference surface and the power generation performance in each of the polymer electrolyte fuel cells 3 having the membrane electrode assemblies 1 of Examples 2-1 to 2-9 and the membrane electrode assemblies 2 of Comparative Examples 2-1 to 2-4. The inclination θ represents the ratios of the number of fibers 15 having an axis inclination θ of 0°≤θ<45° and the number of fibers 15 having an axis inclination θ of 45°≤θ<90° to the total number of fiber 15 measured at the 30 observation points. Further, the power generation performance in the "standard" condition is rated as "good" when the current at a voltage of 0.6V is 25 A or more, and rated as "poor" when the current is less than 25 A. The power generation performance in the "high humidity" condition is rated as "good" when the current at a voltage of 0.6V is 30 A or more, and rated as "poor" when the current is less than 30 A.

That is, the same evaluation criteria as in the First Example were used.

**[Table 2]**

| | 0°≤θ<45° [%] | 45°≤θ<90° [%] | Thickness [µm] | Power generation performance | |
|---|---|---|---|---|---|
| | | | | Standard | High humidity |
| Example 2-1 | 81 | 19 | 14 | good | good |
| Example 2-2 | 82 | 18 | 16 | good | good |
| Example 2-3 | 67 | 33 | 20 | good | good |
| Example 2-4 | 73 | 27 | 12 | good | good |
| Example 2-5 | 72 | 28 | 15 | good | good |
| Example 2-6 | 75 | 25 | 8 | good | good |
| Example 2-7 | 91 | 9 | 10 | good | good |
| Example 2-8 | 80 | 20 | 18 | good | good |
| Example 2-9 | 59 | 41 | 28 | good | good |
| Comparative Example 2-1 | 0 | 0 | 12 | poor | poor |
| Comparative Example 2-2 | 48 | 52 | 35 | poor | poor |
| Comparative Example 2-3 | 45 | 55 | 16 | poor | poor |
| Comparative Example 2-4 | unmeasurable | unmeasurable | unmeasurable | unmeasurable | unmeasurable |

As shown in Table 2, in all of Examples 2-1 to 2-9, the ratio of the number of fibers 15 having the axis inclination θ of 0°≤θ<45° relative to the surface of the catalyst layer is more than 50%. The power generation performance is "good" in both the "standard" condition and the "high humidity" condition. That is, in Examples 2-1 to 2-9, a membrane electrode assembly 1 capable of constituting a fuel cell excellent in power generation performance was obtained. Further, in Examples 2-1 to 2-7, the thickness of the electrode catalyst layer and the fiber diameter of the fiber are within suitable ranges. Therefore, in Examples 2-1 to 2-7, in particular, a membrane electrode assembly 1 capable of constituting a fuel cell excellent in power generation performance was obtained.

On the other hand, in all of Comparative Examples 2-1 to 2-3, the ratio of the number of fibers 15 having the axis inclination θ of 0°≤θ<45° relative to the surface of the catalyst layer is less than 50%. The power generation performance is "poor" in both the "standard" condition and the "high humidity" condition. That is, when the inclination of the fibers 15 in the electrode catalyst layer 10 becomes out of the predetermined range, the power generation performance is deteriorated. Further, the measurement and evaluation of the electrode catalyst layer in Comparative Example 2-4 could not be performed due to a large number of cracks that had occurred. That is, when the configuration of the fibers 15 in the electrode catalyst layer 10 becomes out of the predetermined range, a membrane electrode assembly 1 capable of constituting a fuel cell was not obtained.

### [Reference Signs List]

- 1: Membrane electrode assembly
- 2C: Oxygen electrode
- 2A: Fuel electrode
- 3: Polymer electrolyte fuel cell
- 4: Void
- 10, 10C, 10A: Electrode catalyst layer
- 11: Polymer electrolyte membrane
- 12: Catalytic substance
- 13: Conductive carrier
- 14: Polymer electrolyte
- 15: Fiber
- 16, 16C, 16A: Gasket
- 17, 17C, 17A: Gas diffusion layer
- 18, 18C, 18A: Separator
- 19, 19C, 19A: Gas flow channel
- 20, 20C, 20A: Cooling water flow channel

## Claims

1. An electrode catalyst layer configured to be bonded to a polymer electrolyte membrane for use in a polymer electrolyte fuel cell, the electrode catalyst layer comprising:
a catalytic substance;
a conductive carrier supporting the catalytic substance;
a polymer electrolyte; and
one or more types of fibers containing at least a polymer fiber, wherein,
among the fibers, the number of fibers having an axis inclination θ of 0°≤θ<45° relative to a bonding surface between the polymer electrolyte membrane and the electrode catalyst layer is more than 50% of the total number of the contained fibers.

2. The electrode catalyst layer according to claim 1, wherein the number of fibers having an axis inclination θ of 45°≤θ<90° relative to a bonding surface between the polymer electrolyte membrane and the electrode catalyst layer is more than 5% of the total number of the contained fibers.

3. The electrode catalyst layer according to claim 1 or 2, wherein
the fibers contain an electron-conductive fiber, and
the electron-conductive fiber is a fiber containing at least one selected from a group consisting of partial oxides of carbonitirides of a transition metal element, conductive oxides of a transition metal element, and conductive oxynitrides of a transition metal element.

4. The electrode catalyst layer according to claim 1 or 2, wherein
the fibers contain an electron-conductive fiber, and
the electron-conductive fiber is a carbon nanofiber.

5. The electrode catalyst layer according to any one of claims 1 to 4, wherein the polymer fiber has an average fiber diameter of 100 nm or more and 400 nm or less.

6. The electrode catalyst layer according to any one of claims 1 to 5, wherein the polymer fiber contains an azole structure.

7. The electrode catalyst layer according to any one of claims 1 to 6, wherein the polymer fiber has proton conduction properties.

8. The electrode catalyst layer according to any one of claims 1 to 7, wherein the electrode catalyst layer has a thickness of 5 µm or more and 20 µm or less.

9. A membrane electrode assembly wherein the electrode catalyst layer according to any one of claims 1 to 8 is provided at least on a surface on one side of the polymer electrolyte membrane.

10. A polymer electrolyte fuel cell comprising the membrane electrode assembly according to claim 9.
